# EUROPÄISCHE PATENTSCHRIFT

(11) **EP 2 990 610 B1**
(45) Veröffentlichungstag und Bekanntmachung des Hinweises auf die Patenterteilung: **06.12.2017**
(21) Anmeldenummer: 15182193.1
(22) Anmeldetag: 24.08.2015
(51) Int. Cl.: F01D 15/10, F02C 7/32, F02C 7/36

(54) **FLUGTRIEBWERK UND VERFAHREN ZUM BETREIBEN EINES FLUGTRIEBWERKES**
AIRCRAFT ENGINE AND METHOD FOR OPERATING AN AIRPLANE ENGINE
MOTEUR D'AVION ET PROCEDE DE FONCTIONNEMENT D'UN MOTEUR D'AVION

(30) Priorität: 26.08.2014 DE 102014112182
(43) Veröffentlichungstag der Anmeldung: 02.03.2016
(73) Patentinhaber: Rolls-Royce Deutschland Ltd & Co KG, 15827 Blankenfelde-Mahlow (DE)
(72) Erfinder: Venter, Gideon, 14165 Berlin (DE)
(74) Vertreter: Kronthaler, Wolfgang N.K.

(56) Entgegenhaltungen:
- EP-A1- 1 777 392
- DE-A1-102007 004 274

## Beschreibung

Die Erfindung betrifft ein Flugtriebwerk sowie ein Verfahren zum Betreiben eines Flugtriebwerkes gemäß der im Oberbegriff des Patentanspruches 1 bzw. 9 näher definierten Art.

Bei aus der Praxis bekannten Flugzeugen wird Leistung mittels verschiedener elektrischer Komponenten erzeugt. Kleinflugzeuge nutzen Gleichstromgeneratoren oder Wechselstromgeneratoren. Großraumflugzeuge hingegen sind mit Wechselstromgeneratoren ausgeführt, die üblicherweise 115 Volt mit 400 Hertz erzeugen. Über die Wechselstromgeneratoren von Großraumflugzeugen ist im Vergleich zu den Gleichstromgeneratoren der Kleinflugzeuge bei gleichem Systemgewicht ein Vielfaches an Leistung zur Verfügung stellbar, weshalb das Wechselstromsystem insbesondere bei großen elektrischen Lasten Vorteile gegenüber dem Gleichstromsystem aufweist.

Um über die Wechselstromgeneratoren auch Gleichstrom zur Verfügung stellen zu können, werden den Wechselstromgeneratoren sogenannte Gleichrichter zugeordnet, die beispielsweise als 3-Phasen 2-Wegegleichrichter ausgeführt sind.

Üblicherweise umfasst die in einem Flugzeug vorgesehene elektrische Erzeugungseinrichtung eine oder mehrere elektrische Maschinen, die generatorisch betreibbar sind. Die elektrischen Maschinen bzw. Generatoren sind üblicherweise im Bereich eines Hilfsgerätegetriebes eines Flugtriebwerkes verbaut und werden über eine mit einer Triebwerkshochdruckstufe verbundene Antriebswelle eines Strahltriebwerkes angetrieben. Dabei wird der Antriebsstrang zwischen der Antriebswelle und einer solchen elektrischen Maschine bzw. eines derartigen Generators auch dazu verwendet, Drehmoment von einer Starteinrichtung zur Antriebswelle zu führen, um das Strahltriebwerk pneumatisch oder über einen Starter-Generator elektrisch zu starten.

Dabei werden zwei verschiedene Arten von Generatoren zur Erzeugung von elektrischer Energie eingesetzt. Eine erste Gruppe stellen sogenannte drehzahlvariable Konstantfrequenzsysteme dar, die einen Generator aufweisen, der direkt vom Triebwerk angetrieben wird. Solche Systeme sind ohne sogenannte Gleichdrehzahlgetriebe ausgeführt, womit der Generator mit einer über dem Betriebsbereich eines Strahltriebwerks variierenden Triebwerksdrehzahl angetrieben wird und unterschiedlichste Ausgangsfrequenzen produziert. Eine Regeleinheit wandelt die verschiedenen Frequenzen in eine konstante Frequenz von vorzugsweise 400 Hertz um.

Eine zweite Gruppe stellen in ein Gleichdrehzahlgetriebe integrierte Generatoren dar, bei welchen die Generatoren trotz variierender Drehzahlen der Antriebswellen eines Strahltriebwerkes mit einer konstanten Antriebsdrehzahl beaufschlagt werden, um eine geforderte konstante Frequenz von beispielsweise 400 Hertz zu erzeugen.

Es ist unter anderem bekannt, die integrierten Antriebsgeneratoren bzw. Integrated Drive Generators (IDG) über ein Hilfsgerätegetriebe eines Flugtriebwerkes anzutreiben, wobei die Antriebsdrehzahl der IDG Generatoren variiert und von der Triebwerksleistung abhängig ist. Die Gleichdrehzahlgetriebe bestehen üblicherweise aus einem mechanischen Differentialgetriebe und übertragen die Antriebsleistung des Flugtriebwerkes bzw. der Antriebswelle des Flugtriebwerkes in Richtung des Generators des IDG. Die Ausgabedrehzahl des Differentialgetriebes wird beispielsweise durch zwei mechanisch gekoppelte Hydraulikeinheiten verändert. Es handelt sich dabei um eine Pumpe und einen Motor. Jedes Teil beinhaltet eine hydraulische Schrägscheibe, wobei die Pumpe eine im Winkel verstellbare Schrägscheibe aufweist, während der Motor hingegen mit einer festen Schrägscheibe ausgestattet ist. Ein zugeordneter Regler steuert die Ausgangsdrehzahl des Gleichdrehzahlgetriebes über die verstellbare Schrägscheibe.

Die den drehzahlvariablen Konstantfrequenzsystemen zugeordneten und üblicherweise im Bereich eines Flugzeugrumpfes verbauten Regeleinheiten und die im Bereich des Flugtriebwerkes verbauten Generatoren sind nachteilhafterweise durch einen hohen Bauraumbedarf und ein hohes Bauteilgewicht gekennzeichnet und erfordern zusätzlich ein im Bereich einer Flugzeugzelle montiertes Kühlsystem, das zu einer weiteren Erhöhung des Gewichtes und der Komplexität der Flugzeugzelle beiträgt.

IDGs stellen ebenfalls Einheiten mit hohem Bauraumbedarf sowie einem jeweils bei der Auslegung nicht vernachlässigbaren und im Anbindungsbereich des Generators angreifenden Überhangmoment dar, das eine entsprechende Dimensionierung der Bauteilfestigkeit der Stützstruktur des Nebenaggregategetriebes erfordert, um die im Betrieb auftretenden Überlasten und mögliche Schadensfälle im Betrieb absichern zu können. Die daraus resultierenden großen Bauteilabmessungen eines IDG führen wiederum zu großen äußeren Abmessungen der Triebwerksgondel, die Schleppverluste bzw. einen Strömungswiderstand eines Flugzeuges erhöhen. Zusätzlich beeinflusst die hohe Anzahl beweglicher mechanischer Teile im Bereich des Gleichdrehzahlgetriebes eine gewünscht hohe Ausfallsicherheit in nachteilhafter Weise, was jedoch unerwünscht ist.

Des Weiteren erhöht das Gleichdrehzahlgetriebe das Bauteilgewicht eines IDG und auch die im Betrieb auftretenden Lasten, die im Bereich des Nebenaggregategetriebegehäuses abzustützen sind, was wiederum einen Anstieg der Bauteilabmessungen und des Bauteilgewichts aller damit verbundener Flugtriebwerksstrukturen und Lagerungen verursacht und letztendlich einen unerwünschten Anstieg eines Kraftstoffverbrauchs eines Flugtriebwerkes verursacht.

Auch betriebsbedingte Drehungleichförmigkeiten im Bereich der Generatoren verursachen bei einer direkten Anbindung der Generatoren Stoßbeanspruchungen und Drehmomentschwingungen, die direkt in den Nebenaggregateantriebsstrang eingeleitet werden und Belastungsspitzen im Betrieb erhöhen, die wiederum eine entsprechende Bauteilfestigkeit erfordern. Zusätzlich ist eine entsprechende Anpassung des Generatorantriebs erforderlich, um Reaktionsdrehmomente in dessen Bereich zu vermeiden. In bestimmten Fällen ist die Art der Lasteinleitung zu steuern, um einen dynamischen Einfluss auf das System zu minimieren.

Aus der DE 10 2007 004 274 A1 ist ein Flugtriebwerk bekannt, bei dem zur Leistungsübertragung zwischen einer Antriebswelle eines Niederdruckverdichters und einer Antriebswelle eines Hochdruckverdichters ein regelbarer hydrodynamischer Wandler vorgesehen ist.

Der vorliegenden Erfindung liegt die Aufgabe zugrunde, ein durch ein niedriges Bauteilgewicht und einen geringen Bauraumbedarf gekennzeichnetes Flugtriebwerk, das unabhängig von einem Verhalten des hydrodynamischen Drehmomentwandlers in gewünschtem Umfang mit einem Startdrehmoment beaufschlagbar ist, und ein einfach durchführbares Verfahren zum Betreiben eines Flugtriebwerkes zur Verfügung zu stellen.

Erfindungsgemäß wird diese Aufgabe mit einem Flugtriebwerk und mit einem Verfahren mit den Merkmalen des Patentanspruches 1 bzw. 9 gelöst.

Das erfindungsgemäße Flugtriebwerk ist mit zumindest einer elektrischen Maschine ausgebildet, die zum Erzeugen von elektrischer Energie von einer Antriebswelle antreibbar ist. Um ein mit dem Flugtriebwerk ausgeführtes Flugzeug in gewünschtem Umfang mit elektrischer Energie versorgen zu können, ist zwischen der Antriebswelle und der elektrischen Maschine ein hydrodynamischer Drehmomentwandler mit über eine Einrichtung verstellbaren Leitschaufeln vorgesehen. Dies bietet auf konstruktiv einfache und kostengünstige Art und Weise die Möglichkeit, trotz variierender Antriebsdrehzahlen der Antriebswelle die elektrische Maschine mit einer konstanten Antriebsdrehzahl zu betreiben, womit beispielsweise Regeleinheiten zum Regulieren der über die generatorisch betriebene elektrische Maschine erzeugten Spannung, zum Limitieren des Stroms und zum Regeln der Frequenzen nicht erforderlich sind. Ein Turbinenrad des Drehmomentwandlers steht mit einer Welle der elektrischen Maschine in Wirkverbindung. Dadurch, dass zwischen der Antriebswelle und der Welle der elektrischen Maschine eine Koppeleinrichtung vorgesehen ist, über die ein von der motorisch betreibbaren elektrischen Maschine erzeugtes Antriebsmoment in Richtung der Antriebswelle führbar ist, ist das erfindungsgemäße Flugtriebwerk unabhängig vom Verhalten des hydrodynamischen Drehmomentwandlers in gewünschtem Umfang mit einem Startdrehmoment beaufschlagbar und mit geringem Steuer- und Regelaufwand in einen zugeschalteten Betriebszustand überführbar.

Der Erfindung liegt die Kenntnis zugrunde, dass bei hydrodynamischen Drehmomentwandlern mit verstellbaren Leitschaufeln der Massenstrom des im Arbeitsraum umlaufenden Arbeitsmediums einstellbar bzw. regelbar ist. Dabei ist der Massenstrom des im Arbeitsraum des Drehmomentwandlers vorhandenen Hydraulikfluides und die Drehzahl des Turbinenrades des Drehmomentwandlers bei gleicher Drehzahl des Pumpenrades umso kleiner, je mehr die verstellbaren Leitschaufeln den Strömungskanal im Arbeitsraum begrenzen bzw. verschließen. Im Umkehrschluss steigen sowohl der Massenstrom als auch die Drehzahl des Turbinenrades bei gleicher Drehzahl des Pumpenrades an, wenn die Leitschaufeln den Strömungskanal im Arbeitsraum zunehmend freigeben. Somit besteht bei variierenden Antriebsdrehzahlen des Pumpenrads auf einfache Art und Weise die Möglichkeit, durch entsprechende Verstellung der Leitschaufeln die Ausgangsdrehzahl des Drehmomentwandlers bzw. die Drehzahl des Turbinenrades trotz variierender Drehzahlen des Pumpenrades wenigstens annähernd in gewünschtem Umfang konstant einzustellen.

Das erfindungsgemäße Flugtriebwerk ist im Vergleich zu aus der Praxis bekannten Lösungen durch ein geringeres Gesamtgewicht und im Bereich des Antriebes der elektrischen Maschine auch durch geringere Belastungen gekennzeichnet. Dies resultiert aus der Tatsache, dass die Auslegung der Bauteilabmessungen des hydrodynamischen Drehmomentwandlers aufgrund der hohen Antriebsdrehzahlen der elektrischen Maschine in Abhängigkeit eines definierten Drehmomentes vorteilhafterweise begrenzt ist. Ein das Drehmomentübertragungsvermögen eines hydrodynamischen Drehmomentwandlers beschreibender Zusammenhang zeigt, dass die Drehzahl einen wesentlichen Einfluss auf einen Durchmesser eines hydrodynamischen Drehmomentwandlers hat und damit die gesamte Bauteilgröße und das gesamte Bauteilgewicht des Strahltriebwerkes beeinflusst. Die Möglichkeit, den hydrodynamischen Drehmomentwandler aufgrund der hohen Antriebsdrehzahlen der elektrischen Maschine entsprechend kompakt auslegen zu können, trägt dazu bei, dass das Gesamtgewicht des Strahltriebwerkes und die jeweils wirkenden Belastungen auf ein gewünschtes Maß begrenzt sind.

Bei einer vorteilhaften Ausführungsform des erfindungsgemäßen Flugtriebwerkes ist die elektrische Maschine über einen Nebenaggregate mit Drehmoment versorgenden Antriebsstrang antreibbar, womit ein Gesamtgewicht der gesamten Anordnung zur Erzeugung von elektrischer Energie für ein Flugtriebwerk reduzierbar ist und ein im Bereich einer Anbindungsstelle des Generators an einer Tragstruktur des Flugtriebwerkes angreifendes Überhangmoment, welches in diesem Bereich aufgrund der lediglich einseitigen Anbindung des Generators an der Tragstruktur angreift, reduziert ist und zu verringerten Gehäuse- und Lagerlasten führt.

Ist ein Pumpenrad des hydrodynamischen Drehmomentwandlers mit einer Ausgangswelle eines Nebenaggregategetriebes verbunden, liegt keine direkte mechanische Verbindung zwischen dem Nebenaggregate mit Drehmoment versorgenden Antriebsstrang und der elektrischen Maschine vor, womit Unstetigkeiten im Drehmomentverlauf weder vom Nebenaggregate mit Drehmoment versorgenden Antriebsstrang in Richtung des Generators oder in umgekehrter Richtung vom Generator in Richtung des Antriebsstranges übertragen werden. Damit wird die Übertragung unerwünschter Drehmomentschwankungen im Bereich des hydrodynamischen Drehmomentwandlers auf einfache Art und Weise gedämpft. Zusätzlich ist über die schlupfbehaftete hydrodynamische Kopplung zwischen dem Antriebsstrang und der elektrischen Maschine ein Überlastschutz des Systems für einen begrenzten Zeitraum gewährleistet.

Die Koppeleinrichtung umfasst bei einer konstruktiv einfachen und mit geringem Aufwand betätigbaren Ausführungsform des Flugtriebwerkes ein Schaltelement, über das der hydrodynamische Drehmomentwandler während eines mittels eines von der elektrischen Maschine erzeugten Antriebsmoments durchgeführten Startvorganges des Flugtriebwerkes überbrückbar ist.

Bei einer mit geringem Aufwand betreibbaren Weiterbildung des Flugtriebwerkes ist das Schaltelement der Koppeleinrichtung als ein zwischen der Welle der elektrischen Maschine und dem Pumpenrad angeordneter Freilauf ausgeführt, der bei Vorliegen einer positiven Drehzahldifferenz zwischen einer Drehzahl der Welle der elektrischen Maschine und der Drehzahl des Pumpenrades die Welle und das Pumpenrad drehfest miteinander verbindet, während die Welle und das Pumpenrad im Bereich des Freilaufes bei Vorliegen einer negativen Drehzahldifferenz voneinander entkoppelt sind.

Alternativ hierzu ist das Schaltelement der Koppeleinrichtung auch als eine zwischen der Welle der elektrischen Maschine und dem Pumpenrad angeordnete schaltbare Kupplung ausführbar, mittels der die Welle und das Pumpenrad bei Vorliegen einer positiven Drehzahldifferenz zwischen einer Drehzahl der Welle der elektrischen Maschine und der Drehzahl des Pumpenrades drehfest miteinander verbindbar sind, während die Welle und das Pumpenrad im Bereich der schaltbaren Kupplung bei Vorliegen einer negativen Drehzahldifferenz voneinander entkoppelbar sind.

Dabei kann das Schaltelement der Koppeleinrichtung als eine Wandlerüberbrückungskupplung ausgeführt sein.

Bei weiteren konstruktiv einfachen und kostengünstigen Ausführungsformen des erfindungsgemäßen Flugtriebwerkes ist ein Ölkreislauf des hydrodynamischen Drehmomentwandlers mit einem Ölkreislauf des Flugtriebwerkes und/oder mit einem Ölkreislauf der elektrischen Maschine wirkverbunden.

Ist im Leistungspfad zwischen der Antriebswelle und dem Pumpenrad des hydrodynamischen Drehmomentwandlers eine Getriebeeinrichtung vorgesehen, über die eine Drehzahl der Antriebswelle auf eine für den Antrieb des hydrodynamischen Drehmomentwandlers günstige Antriebsdrehzahl transformierbar ist, ist der hydrodynamische Drehmomentwandler in einem wirkungsgradoptimalen Betriebsbereich betreibbar. Ein solches Getriebe kann beispielsweise zwei oder mehrere miteinander in Eingriff stehende Stirnräder umfassen.

Bei dem erfindungsgemäßen Verfahren zum Betreiben des erfindungsgemäßen Flugtriebwerkes werden die Leitschaufeln in Abhängigkeit einer Drehzahl der Antriebswelle verstellt und die Drehzahl der Welle der generatorisch betriebenen elektrischen Maschine über die Verstellung der Leitschaufeln im Wesentlichen innerhalb eines vordefinierten Drehzahlbereiches eingestellt. Damit ist eine elektrische Versorgung eines mit dem erfindungsgemäßen Flugtriebwerk ausgeführten Flugzeuges auf einfache Art und Weise ohne die Ausgangsspannung der elektrischen Maschine regulierende, den Strom limitierende und die Frequenz regelnde Generatorregeleinheit versorgbar. Ein Flugzeug ist dadurch auch auf einfache Art und Weise leichter ausführbar und der nicht für die Generatorregeleinheit zur Verfügung zu stellende Bauraum ist anderweitig nutzbar.

Die Leitschaufeln des hydrodynamischen Drehmomentwandlers werden bei einer vorteilhaften Variante des erfindungsgemäßen Verfahrens zur Einhaltung einer konstanten Drehzahl der Welle der generatorisch betriebenen elektrischen Maschine in Abhängigkeit der aktuellen Drehzahl der Antriebswelle verstellt, womit Drehzahlschwankungen der Antriebswelle und somit des Flugtriebwerkes mit geringem Steuer- und Regelaufwand innerhalb kurzer Betriebszeiten mit hoher Spontaneität ausgleichbar sind.

Wird die Drehzahl der Antriebswelle im Bereich zwischen der Antriebswelle und dem Drehmomentwandler auf ein Drehzahlniveau geführt, zu dem der hydrodynamische Drehmomentwandler und die elektrische Maschine mit hohem Wirkungsgrad betreibbar sind, sind sowohl der Drehmomentwandler als auch die elektrische Maschine entsprechend klein dimensionierbar und das erfindungsgemäße Flugtriebwerk ist mit einem günstigen Gesamtgewicht und möglichst kompakt ausführbar.

Sowohl die in den Patentansprüchen angegebenen Merkmale als auch die im nachfolgenden Ausführungsbeispiel des erfindungsgemäßen Flugtriebwerkes angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Flugtriebwerkes ergeben sich aus den Patentansprüchen und dem nachfolgend unter Bezugnahme auf die Zeichnung prinzipmäßig beschriebenen Ausführungsbeispiel.

Es zeigt:
- Fig. 1: eine stark schematisierte Längsschnittansicht eines Flugtriebwerkes; und
- Fig. 2: eine vergrößerte Ansicht eines in Fig. 1 näher gekennzeichneten Bereiches II.

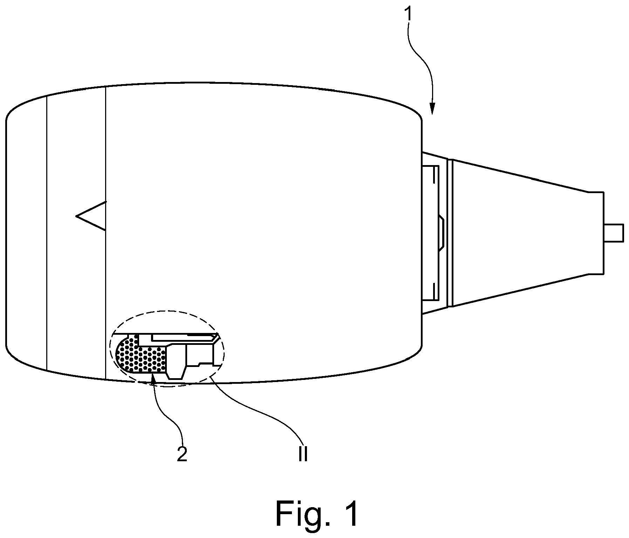

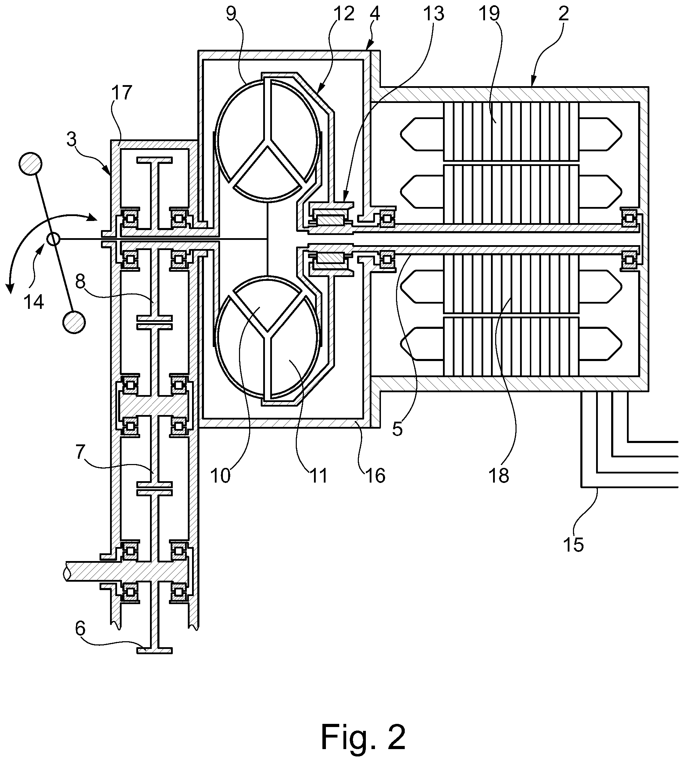

Fig. 1 zeigt eine Schnittansicht eines Flugtriebwerkes 1, das in einem unteren Bereich eine elektrische Maschine 2 zum Erzeugen elektrischer Energie aufweist. Die elektrische Maschine 2 ist vorliegend als Wechselstrommaschine ausgeführt, die sowohl generatorisch als auch motorisch betreibbar ist, und von einer nicht näher dargestellten Antriebswelle des Flugtriebwerkes 1 mit Drehmoment beaufschlagbar ist, um im generatorischen Betrieb elektrische Energie zu erzeugen. Die Antriebswelle ist mit einer Hochdruckturbine des Flugtriebwerkes 1 verbunden, wobei das im Bereich der Antriebswelle anliegende Drehmoment über ein in Fig. 2 näher gezeigtes Getriebe 3 und einen hydrodynamischen Drehmomentwandler 4 auf eine Welle 5 der elektrischen Maschine 2 in entsprechend gewandeltem Umfang übertragbar ist. Das Getriebe 3 umfasst vorliegend drei miteinander in Eingriff stehende Stirnräder 6 bis 8. Ein Pumpenrad 9 des hydrodynamischen Drehmomentwandlers 4 steht mit dem Stirnrad 8 in Wirkverbindung und überträgt über ein im Inneren des hydrodynamischen Drehmomentwandlers 4 vorhandenes Hydraulikfluid und verstellbare Leitschaufeln 10 entsprechend der Charakteristik des hydrodynamischen Drehmomentwandlers 4 das über das Stirnrad 8 am Pumpenrad 9 anliegende Drehmoment auf ein Turbinenrad 11 des hydrodynamischen Drehmomentwandlers 4, das mit der Welle 5 der elektrischen Maschine 2 drehfest verbunden ist. Die Welle ist wiederum drehfest mit einem Rotor 18 der elektrischen Maschine 2 gekoppelt, der in an sich bekannter Art und Weise mit einem Stator 19 der elektrischen Maschine 2 zusammenwirkt.

Zwischen dem Pumpenrad 9 des hydrodynamischen Drehmomentwandlers 4 und der Welle 5 der elektrischen Maschine 2 ist eine Koppeleinrichtung 12 vorgesehen, die ein Schaltelement 13 umfasst, über das der hydrodynamische Drehmomentwandler 4 während eines mittels eines von der elektrischen Maschine 2 erzeugten Antriebsmomentes durchgeführten Startvorganges des Flugtriebwerkes 1 überbrückbar ist. Hierfür kann es beispielsweise vorgesehen sein, dass die dann motorisch betriebene elektrische Maschine 2 auf einem Rollfeld eines Flughafens durch eine externe Stromquelle bestromt und ein für das Flugtriebwerk erforderliches Antriebsmoment erzeugt wird, das dann von der Welle 5 über das vorliegend als Freilauf ausgeführte Schaltelement 13 der Koppeleinrichtung 12 direkt auf das Pumpenrad 9 und von dort über das Getriebe 3 in Richtung der Antriebswelle des Flugtriebwerkes 1 geführt wird.

Hierfür sperrt der Freilauf 13 bei Vorliegen einer positiven Drehzahldifferenz zwischen einer Drehzahl der Welle 5 der elektrischen Maschine 2 und der Drehzahl des Pumpenrades 9 und verbindet die Welle 5 und das Pumpenrad 9 drehfest miteinander, während die Welle 5 und das Pumpenrad 9 im Bereich des Freilaufes 13 bei Vorliegen einer negativen Drehzahldifferenz voneinander entkoppelt sind.

Der beim Starten im Bereich des Freilaufes 13 vorliegende direkte mechanische Antrieb bietet einen signifikanten Vorteil, da die elektrische Maschine 2 im generatorischen Betrieb bei maximalen Drehzahlen verwendbar ist und während eines motorischen Betriebszustandes beim Starten des Flugtriebwerkes 1 über die elektrische Maschine 2 ein geringeres Startdrehmoment zur Verfügung stellbar ist. Damit ist ein Wirkungsgrad des Startvorganges bei gleichzeitig klein dimensionierter und mit geringem Gewicht ausgeführter elektrischer Maschine 2 verbesserbar.

Die Leitschaufeln 10 werden vorliegend über eine Verstelleinrichtung 14 derart verstellt, dass die Welle 5 trotz variierender Drehzahl der Antriebswelle des Flugtriebwerkes 1 zur Erzeugung einer konstanten Spannung und einer konstanten Frequenz mit einer im Wesentlichen konstanten Drehzahl rotiert, wobei die im Bereich der elektrischen Maschine 2 während eines generatorischen Betriebes erzeugte elektrische Energie über Leitungen 15 zu elektrischen Verbrauchern im Bereich eines mit dem Flugtriebwerk versehenen Flugzeuges weitergeleitet wird.

Die Übersetzung des Getriebes 3 und die daraus resultierende Eingangsdrehzahl des hydrodynamischen Drehmomentwandlers 4 wird in Abhängigkeit der Leistungsfähigkeit des hydrodynamischen Drehmomentwandlers 4 und der Charakteristik der Drehzahlverhältnisse ausgewählt, wobei das Getriebe 3 vorliegend Teil eines Nebenaggregategetriebes des Flugtriebwerkes 1 ist. Zur Erzeugung von elektrischer Energie über die elektrische Maschine 2 ist das Pumpenrad 9 mit einer höheren Drehzahl zu betreiben als das Turbinenrad 11, da nur in diesem Fall Drehmoment von der Antriebswelle des Flugtriebwerkes in Richtung der elektrischen Maschine 2 über den hydrodynamischen Drehmomentwandler 4 übertragbar ist. Die Ausgangsdrehzahl des hydrodynamischen Drehmomentwandlers 4 bzw. die Drehzahl des Turbinenrades 11 ist innerhalb eines engen Betriebsdrehzahlbereiches einzustellen, um den Anforderungen des elektrischen Systems bzw. der elektrischen Maschine 2 gerecht zu werden. Da die Antriebsdrehzahl des Flugtriebwerkes 1 im Hochdruckbereich variiert, ist die Drehzahl des Turbinenrades 12 durch Verstellen der Leitschaufeln 10 auf den angeforderten Wert einzustellen. Die Verstelleinrichtung 14 wird von einem Steuersystem des Flugtriebwerkes 1 mit den dafür erforderlichen Eingangssignalen versorgt, um eine aktuelle Stellung der Leitschaufeln 10 in Abhängigkeit einer Veränderung der Antriebsdrehzahl der Antriebswelle des Flugtriebwerkes 1 entsprechend zu verändern.

Die Eigenschaften des hydrodynamischen Drehmomentwandlers 4 werden entsprechend ausgelegt, um die elektrische Maschine mit hohem Wirkungsgrad über den gesamten Drehzahlbereich des Flugtriebwerkes 1 betreiben zu können. Während eines generatorischen Betriebes der elektrischen Maschine 2 ist die Wirkverbindung zwischen der Welle 5 und dem Pumpenrad 9 im Bereich der Koppeleinrichtung 12 bzw. im Bereich des Freilaufes 13 getrennt, womit das Pumpenrad 9 und die Welle 5 unabhängig voneinander rotieren.

Während eines Startmodus wird Drehmoment von der elektrischen Maschine 2 in Richtung der Antriebswelle des Flugtriebwerkes 1 geführt, um die Antriebswelle des Hochdruckbereiches des Flugtriebwerkes 1 auf die für den Startvorgang des Flugtriebwerkes 1 erforderliche Startdrehzahl zu beschleunigen. In diesem Betriebszustand der elektrischen Maschine 2 verbindet der Freilauf 13 die Welle 5 drehfest mit dem Pumpenrad 9, womit der hydrodynamische Drehmomentwandler 4 überbrückt ist. In zugeschaltetem Betriebszustand des Flugtriebwerkes 1 wird der hydrodynamische Drehmomentwandler 4 mit Hydraulikfluid beaufschlagt und das Pumpenrad 9 wird wiederum von der Antriebswelle des Flugtriebwerkes 1 beschleunigt, womit der Freilauf 13 gelöst wird.

Der hydrodynamische Drehmomentwandler 4 ist entweder in einen Nebenaggregate des Flugtriebwerkes 1 mit Drehmoment versorgenden Antriebsstrang integrierbar und über das Ölsystem des Flugtriebwerkes 1 versorgbar oder im Bereich der elektrischen Maschine 2 anordenbar, in dem bei aus der Praxis bekannten Lösungen das sogenannte Gleichdrehzahlgetriebe (Constant Speed Drive, CSD) üblicherweise vorgesehen ist. Bei letztgenannter Anordnung des hydrodynamischen Drehmomentwandlers 4 ist dieser über das Ölsystem der elektrischen Maschine 2 versorgbar. Die Anbindung an eines der Ölsysteme ist erforderlich, um Hydraulikfluid bzw. Öl zur Verfügung zu stellen, welches das Medium für die Drehmomentübertragung ist. In Abhängigkeit des ausgewählten Ölsystems wird die Kühlung des Öls über den jeweils betreffenden Systemkühler durchgeführt.

Wie in der Zeichnung dargestellt, ist die elektrische Maschine 2 lediglich im Bereich des dem hydrodynamischen Drehmomentwandler 4 zugewandten Bereiches an einer Tragstruktur 16 des Flugtriebwerkes 1 angebunden, womit im Anbindungsbereich der elektrischen Maschine 2 an der Tragstruktur 16 jeweils ein in Abhängigkeit des Bauteilgewichtes der elektrischen Maschine 2 resultierendes Überhangmoment (Overhung Moment) wirkt. Die hohen Drehzahlen der elektrischen Maschine 2 bieten die Möglichkeit, den hydrodynamischen Drehmomentwandler 4 auf ein daraus resultierendes definiertes Drehmoment mit geringen Bauteilabmessungen auszulegen bzw. auszuführen. Die die Drehmomentübertragungsfähigkeit des hydrodynamischen Drehmomentwandlers 4 beschreibende Gleichung zeigt, dass die Drehzahl einen wesentlichen Einfluss auf den Durchmesser eines hydrodynamischen Drehmomentwandlers und damit auf die Gesamtabmessungen und das Gesamtgewicht der die elektrische Maschine 2, den hydrodynamischen Drehmomentwandler 4 und das Getriebe 3 aufweisenden Einheit hat. Damit sind das Gesamtgewicht der Einheit und ein im Bereich der Tragstruktur 16 sowie in einem Anbindungsbereich der Tragstruktur 16 am Getriebe 3 angreifendes Überhangmoment sowie Belastungen im Bereich eines Gehäuses 17 des Nebenaggregategetriebes 3 und Lagerbelastungen niedrig.

Dadurch, dass der hydrodynamische Drehmomentwandler in den Nebenaggregate mit Drehmoment versorgenden Antriebsstrang integrierbar ist, besteht zudem die Möglichkeit, das Überhangmoment und das Gewicht der elektrischen Maschine 2, des hydrodynamischen Drehmomentwandlers 4 und des Getriebes 3 möglichst gering zu halten. Zusätzlich können die Drehmomenteigenschaften des hydrodynamischen Drehmomentwandlers 4 so eingestellt werden, dass diese an definierte Ausführungen und Drehzahlbereiche des Flugtriebwerkes 1 optimal angepasst sind, um geringe Antriebsverluste und eine minimale Wärmeentwicklung zu gewährleisten.

Die im Vergleich zu bislang bekannten und mit Gleichdrehzahlgetrieben ausgebildeten Flugtriebwerken durch den Einsatz des hydrodynamischen Drehmomentwandlers 4 verringerte Bauteilanzahl bietet wiederum auf einfache Art und Weise die Möglichkeit, eine Ausfallsicherheit der gesamten Einheit zu verbessern. Des Weiteren sind bei dem vorbeschriebenen Flugtriebwerk 1 nicht wie bei Flugtriebwerken, die mit herkömmlichen Gleichdrehzahlgetrieben ausgeführt sind, bestimmte Drehzahlbereiche des Flugtriebwerkes 1 zu vermeiden.

### Bezugszeichenliste

- 1: Flugtriebwerk
- 2: elektrische Maschine
- 3: Getriebe
- 4: hydrodynamischer Drehmomentwandler
- 5: Welle der elektrischen Maschine
- 6 bis 8: Stirnrad
- 9: Pumpenrad des hydrodynamischen Drehmomentwandlers
- 10: verstellbare Leitschaufeln des hydrodynamischen Drehmoment-wandlers
- 11: Turbinenrad des hydrodynamischen Drehmomentwandlers
- 12: Koppeleinrichtung
- 13: Schaltelement
- 14: Verstelleinrichtung
- 15: Leitungen
- 16: Tragstruktur
- 17: Gehäuse des Getriebes
- 18: Rotor der elektrischen Maschine
- 19: Stator der elektrischen Maschine

## Patentansprüche

1. Flugtriebwerk (1) mit zumindest einer elektrischen Maschine (2), die zum Erzeugen von elektrischer Energie von einer Antriebswelle antreibbar ist, wobei zwischen der Antriebswelle und der elektrischen Maschine (2) ein hydrodynamischer Drehmomentwandler (4) mit über eine Einrichtung (14) verstellbaren Leitschaufeln (10) vorgesehen ist, und wobei ein Turbinenrad (11) des Drehmomentwandlers (4) mit einer Welle (5) der elektrischen Maschine (2) in Wirkverbindung steht, **dadurch gekennzeichnet, dass** zwischen der Antriebswelle und der Welle (5) der elektrischen Maschine (2) eine Koppeleinrichtung (12) vorgesehen ist, über die ein von der motorisch betreibbaren elektrischen Maschine (2) erzeugtes Antriebsmoment in Richtung der Antriebswelle führbar ist.

2. Flugtriebwerk nach Anspruch 1, **dadurch gekennzeichnet, dass** die elektrische Maschine (2) über einen Nebenaggregate mit Drehmoment versorgenden Antriebsstrang antreibbar ist.

3. Flugtriebwerk nach Anspruch 1 oder 2, **dadurch gekennzeichnet, dass** ein Pumpenrad (9) des hydrodynamischen Drehmomentwandlers (4) mit einer Ausgangswelle einer zwischen der Antriebswelle und dem Pumpenrad vorgesehenen Getriebeeinrichtung (3) verbunden ist.

4. Flugtriebwerk nach einem der Ansprüche 1 bis 3, **dadurch gekennzeichnet, dass** die Koppeleinrichtung (12) ein Schaltelement (13) umfasst, über das der hydrodynamische Drehmomentwandler (4) während eines mittels eines von der elektrischen Maschine (2) erzeugten Antriebsmomentes durchgeführten Startvorganges des Flugtriebwerkes (1) überbrückbar ist.

5. Flugtriebwerk nach Anspruch 4, **dadurch gekennzeichnet, dass** das Schaltelement (13) der Koppeleinrichtung (12) als ein zwischen der Welle (5) der elektrischen Maschine (2) und dem Pumpenrad (9) angeordneter Freilauf ausgeführt ist, der bei Vorliegen einer positiven Drehzahldifferenz zwischen einer Drehzahl der Welle (5) der elektrischen Maschine (2) und der Drehzahl des Pumpenrades (9) die Welle (5) und das Pumpenrad (9) drehfest miteinander verbindet, während die Welle (5) und das Pumpenrad (9) im Bereich des Freilaufes (13) bei Vorliegen einer negativen Drehzahldifferenz voneinander entkoppelt sind.

6. Flugtriebwerk nach Anspruch 4, **dadurch gekennzeichnet, dass** das Schaltelement (13) der Koppeleinrichtung (12) eine Wandlerüberbrückungskupplung ist.

7. Flugtriebwerk nach einem der Ansprüche 1 bis 6, **dadurch gekennzeichnet, dass** ein Ölkreislauf des hydrodynamischen Drehmomentwandlers (4) mit einem Ölkreislauf des Flugtriebwerkes (1) verbunden ist.

8. Flugtriebwerk nach einem der Ansprüche 1 bis 7, **dadurch gekennzeichnet, dass** ein Ölkreislauf des hydrodynamischen Drehmomentwandlers (4) mit einem Ölkreislauf der elektrischen Maschine (2) wirkverbunden ist.

9. Verfahren zum Betreiben eines Flugtriebwerkes (1) gemäß einem der Patentansprüche 1 bis 8, **dadurch gekennzeichnet, dass** die Leitschaufeln (10) in Abhängigkeit einer Drehzahl der Antriebswelle verstellt werden und die Drehzahl der Welle (5) der generatorisch betriebenen elektrischen Maschine (2) über die Verstellung der Leitschaufeln (10) im Wesentlichen innerhalb eines vordefinierten Drehzahlbereiches einstellbar ist.

10. Verfahren nach Anspruch 9, **dadurch gekennzeichnet, dass** die Leitschaufeln (10) zur Einhaltung einer konstanten Drehzahl der Welle (5) der generatorisch betriebenen elektrischen Maschine (2) in Abhängigkeit der aktuellen Drehzahl der Antriebswelle verstellt werden.

11. Verfahren nach Anspruch 9 oder 10, **dadurch gekennzeichnet, dass** die Drehzahl der Antriebswelle im Bereich zwischen der Antriebswelle und dem Drehmomentwandler (4) auf ein Drehzahlniveau geführt wird, zu dem der hydrodynamische Drehmomentwandler (4) und die elektrische Maschine (2) mit hohem Wirkungsgrad betreibbar sind.

## Claims

1. Aircraft engine (1) having at least one electrical machine (2), that can be driven by a drive shaft for generating electric energy, where a hydrodynamic torque converter (4) with guide vanes (10) adjustable by means of a device (14) is provided between the drive shaft and the electrical machine (2), and where a turbine wheel (11) of the torque converter (4) is in operative connection with a shaft (5) of the electrical machine (2), **characterized in that** a coupling device (12) is provided between the drive shaft and the shaft (5) of the electrical machine (2), using which coupling device a drive torque generated by the motor-operatable electrical machine (2) can be guided in the direction of the drive shaft.

2. Aircraft engine in accordance with Claim 1, **characterized in that** the electrical machine (2) can be driven via a drive train that supplies torques to accessories.

3. Aircraft engine in accordance with Claim 1 or 2, **characterized in that** a pump wheel (9) of the hydrodynamic torque converter (4) is connected to an output shaft of a gear device (3) provided between the drive shaft and the pump wheel.

4. Aircraft engine in accordance with one of the Claims 1 to 3, **characterized in that** the coupling device (12) includes a switch element (13), using which the hydrodynamic torque converter (4) is bridgeable during a start process of the aircraft engine (1) performed by means of a drive torque generated by the electrical machine (2).

5. Aircraft engine in accordance with Claim 4, **characterized in that** the switch element (13) of the coupling device (12) is designed as a freewheel arranged between the shaft (5) of the electrical machine (2) and the pump wheel (9), which freewheel connects the shaft (5) and the pump wheel (9) non-rotatably to one another, when there is a positive speed difference between a speed of the shaft (5) of the electrical machine (2) and the speed of the pump wheel (9), whereas the shaft (5) and the pump wheel (9) in the area of the freewheel (13) are decoupled from one another, when there is a negative speed difference.

6. Aircraft engine in accordance with Claim 4, **characterized in that** the switch element (13) of the coupling device (12) is a converter bridging coupling.

7. Aircraft engine in accordance with one of the Claims 1 to 6, **characterized in that** an oil circuit of the hydrodynamic torque converter (4) is connected to an oil circuit of the aircraft engine (1).

8. Aircraft engine in accordance with one of the Claims 1 to 7, **characterized in that** an oil circuit of the hydrodynamic torque converter (4) is operatively connected to an oil circuit of the electrical machine (2).

9. Method for operating an aircraft engine (1) in accordance with one of the patent Claims 1 to 8, **characterized in that** the guide vanes (10) are adjusted as a function of a speed of the drive shaft, and that the speed of the shaft (5) of the generatorily operated electrical machine (2) can be adjusted essentially within a predefined speed range by variation of the guide vanes (10).

10. Method in accordance with Claim 9, **characterized in that** the guide vanes (10) are adjusted as a function of the current speed of the drive shaft in order to keep constant the speed of the shaft (5) of the generatorily operated electrical machine (2).

11. Method in accordance with Claim 9 or 10, **characterized in that** the speed of the drive shaft in the area between the drive shaft and the torque converter (4) is brought to a speed level, at which the hydrodynamic torque converter (4) and the electrical machine (2) can be operated at high efficiency.

## Revendications

1. Moteur d'avion (1) avec au moins une machine électrique (2) pouvant être entraînée par un arbre d'entraînement pour produire de l'énergie électrique, sachant qu'un convertisseur de couple hydrodynamique (4) avec aubes directrices (10) ajustables via un dispositif (14) est prévu entre l'arbre d'entraînement et la machine électrique (2) et sachant qu'une roue de turbine (11) du convertisseur de couple (4) est en liaison active avec un arbre (5) de la machine électrique (2), **caractérisé en ce qu'**un dispositif de couplage (12) est prévu entre l'arbre d'entraînement et l'arbre (5) de la machine électrique (2) par le biais duquel dispositif de couplage un couple d'entraînement produit par la machine électrique (2) pouvant être actionnée par un moteur peut être guidé en direction de l'arbre d'entraînement.

2. Moteur d'avion selon la revendication n° 1, **caractérisé en ce que** la machine électrique (2) peut être entraînée par un train d'entraînement alimentant en couple les accessoires.

3. Moteur d'avion selon la revendication n° 1 ou n° 2, **caractérisé en ce qu'**une roue de pompe (9) du convertisseur de couple hydrodynamique (4) est relié à un arbre de sortie d'un dispositif de transmission (3) prévu entre l'arbre d'entraînement et la roue de pompe.

4. Moteur d'avion selon une des revendications n° 1 à n° 3, **caractérisé en ce que** le dispositif de couplage (12) comprend un élément de commutation (13) au moyen duquel le convertisseur de couple hydrodynamique (4) peut être ponté pendant un processus de démarrage du moteur d'avion (1) exécuté au moyen d'un couple d'entraînement produit par la machine électrique (2).

5. Moteur d'avion selon la revendication n° 4, **caractérisé en ce que** l'élément de commutation (13) du dispositif de couplage (12) est conçu sous forme de roue libre disposée entre l'arbre (5) de la machine électrique (2) et la roue de pompe (9), laquelle roue libre relie ensemble de manière non-rotative l'arbre (5) et la roue de pompe (9) s'il existe une différence de vitesse positive entre une vitesse de l'arbre (5) de la machine électrique (2) et la vitesse de la roue de pompe (9), tandis que l'arbre (5) et la roue de pompe (9) sont découplés au niveau de la roue libre (13) s'il existe une différence de vitesse négative.

6. Moteur d'avion selon la revendication n° 4, **caractérisé en ce que** l'élément de commutation (13) du dispositif de couplage (12) est un embrayage de pontage du convertisseur.

7. Moteur d'avion selon une des revendications n° 1 à n° 6, **caractérisé en ce qu'**un circuit d'huile du convertisseur de couple hydrodynamique (4) est en liaison avec un circuit d'huile du moteur d'avion (1).

8. Moteur d'avion selon une des revendications n° 1 à n° 7, **caractérisé en ce qu'**un circuit d'huile du convertisseur de couple hydrodynamique (4) est en liaison active avec un circuit d'huile de la machine électrique (2).

9. Procédé pour actionner un moteur d'avion (1) selon une des revendications n° 1 à n° 8, **caractérisé en ce que** les aubes directrices (10) sont ajustées en fonction d'une vitesse de l'arbre d'entraînement et que la vitesse de l'arbre (5) de la machine électrique (2) actionnée par un générateur est réglable par le biais de l'ajustage des aubes directrices (10), essentiellement à l'intérieur d'une plage de vitesse prédéfinie.

10. Procédé selon la revendication n° 9, **caractérisé en ce que** les aubes directrices (10) sont ajustées en fonction de la vitesse actuelle de l'arbre d'entraînement, pour maintenir une vitesse constante de l'arbre (5) de la machine électrique (2) actionnée par un générateur.

11. Procédé selon la revendication n° 9 ou n° 10, **caractérisé en ce que** la vitesse de l'arbre d'entraînement dans la zone comprise entre l'arbre d'entraînement et le convertisseur de couple (4) est amenée à un régime de vitesse, auquel le convertisseur de couple hydrodynamique (4) et la machine électrique (2) peuvent être exploités avec un grand rendement.
